# EUROPÄISCHE PATENTSCHRIFT

(11) **EP 0 392 211 B1**
(45) Veröffentlichungstag und Bekanntmachung des Hinweises auf die Patenterteilung: **29.12.1993**
(21) Anmeldenummer: 90104994.0
(22) Anmeldetag: 16.03.1990
(51) Int. Cl.: C01B 17/90, C22B 34/12, C01G 23/053

(54) **Verfahren zur Wiederverwendung von Abfallschwefelsäure**
Process for the reuse of spent sulfuric acid
Procédé de réutilisation d'acide sulfurique résiduaire

(30) Priorität: 07.04.1989 CH 1315/89
(43) Veröffentlichungstag der Anmeldung: 17.10.1990
(73) Patentinhaber: Sulzer-Escher Wyss AG, CH-8023 Zürich (CH)
(72) Erfinder: Mauer, Josef, D-5090 Leverkusen 3 (DE); Bansal, Parmanand, CH-8121 Benglen (CH)
(74) Vertreter: Paschedag, Hansjoachim

(56) Entgegenhaltungen:
- EP-A- 0 133 505
- CH-A- 471 905
- DE-A- 2 729 755
- FR-A- 2 357 479

## Beschreibung

Die Erfindung betrifft ein Verfahren zur Wiederverwendung der bei der Titandioxidherstellung nach dem Sulfatverfahren anfallenden Abfallschwefelsäure niedriger Konzentration, wobei die anfallende Abfallschwefelsäure von einer Ausgangskonzentration von 20 - 24 Gew.-% auf 65 - 82 Gew.-%, vorzugsweise auf 65 - 75 Gew.-%, aufkonzentriert wird, wobei ein Teil der gelösten Metallsalze ausfällt und mit der aufkonzentrierten Schwefelsäure eine Suspension bildet, und wobei hochkonzentrierte Schwefelsäure zum Titanrohstoff-Aufschluss zurückgeführt wird.

Ein solches Verfahren ist beispielsweise aus der DE-A-2 729 755 bekannt.

Bei der Titandioxid-Herstellung ist die Entsorgung der Abfallprodukte, insbesondere der anfallenden Schwefelsäure niedriger Konzentration und der darin enthaltenen Metallsalze ein dringendes Problem. Die einzige, auf die Dauer tragbare Lösung ist die Wiederverwendung der Abfallschwefelsäure, der sogenannten Dünnsäure, zum Aufschluss der Titanrohstoffe. Da dazu jedoch Schwefelsäure höherer Konzentration erforderlich ist, d.h. je nach Ausgangsmaterial mit einer Konzentration zwischen ca. 85 und 92 Gew.-%, muss die Dünnschwefelsäure auf eine höhere Konzentration aufkonzentriert werden. Aus praktischen und energetischen Gründen ist es jedoch zweckmässig und üblich, diese Aufkonzentration nur bis zu einer Endkonzentration von ca. 65 82 Gew.-%, möglichst jedoch nur bis 65 - 75 Gew.-%, vorzunehmen und die aufkonzentrierte Schwefelsäure mit höchstkonzentrierter Schwefelsäure von mindestens 95 Gew.-% zu mischen, um die für den Start der Titanrohstoff-Aufschlussreaktion erforderliche Konzentration zu erreichen.

Ein weiteres Problem ist die Beseitigung der in der Abfallschwefelsäure enthaltenen Metallsalze, insbesondere Schwermetallsulfate. Zwar fallen bei der Aufkonzentration der Dünnschwefelsäure die meisten Metallsalze aus und bilden eine Suspension. Durch Filtrieren der aufkonzentrierten Säure kann der grösste Teil der ausgefällten Metallsalze abgetrennt und entfernt werden, so dass die aufkonzentrierte Schwefelsäure ausser immer noch gelösten Metallsalzen nur noch Reste von ausgefällten Metallsalzen enthält.

Der vorzugsweise aus Metallsulfaten und anhaftender Schwefelsäure bestehende Filterkuchen wird dagegen in einer Röstanlage weiterverarbeitet, wobei die entstehenden Schwefeloxid-Gase zur Herstellung von höchstkonzentrierter Schwefelsäure verwendet werden, die in den Titanrohstoff-Aufschluss zurückgeführt wird.

Nachteilig bei dem bekannten Verfahren ist es, dass die in der aufkonzentrierten Schwefelsäure verbleibenden Metallsalze einen negativen Einfluss auf die Qualität des erzeugten Titandioxides haben, insbesondere die Chrom- oder Vanadiumsalze, die wegen ihrer färbenden Wirkung einen besonders starken Einfluss auf die Pigmentqualität haben. Eine Verbesserung wäre zwar durch eine weitere Aufkonzentration der Schwefelsäure in einer Hochkonzentrieranlage unter Ausfällung weiterer Metallsalze zu erreichen. Dies erfordert jedoch aufwendige und energieintensive Zusatzanlagen.

Aufgabe der vorliegenden Erfindung ist es, die vorstehend genannten Nachteile des Standes der Technik zu beseitigen und ein Verfahren zur Wiederverwendung der bei der Titandioxid-Herstellung anfallenden Abfallschwefelsäure nach einem einfachen Konzept zu schaffen, dass keine aufwendigen Zusatzkomponenten erfordert, und bei dem auf eine Hochkonzentrierung der Schwefelsäure auf mehr als 65 - 75 Gew.-% verzichtet wird, und wobei trotzdem die Rückführsäure deutlich weniger Metallverunreinigungen enthält. Das Verfahren soll zudem für die veschiedenen Ausgangsprodukte, insbesondere Titanschlacke und Ilmenit als Rohstoff bei der Titandioxid-Herstellung einsetzbar sein.

Erfindungsgemäss wird diese Aufgabe dadurch gelöst, dass höchstens nur ein Viertel der aus der Abfallschwefelsäure gewonnenen aufkonzentrierten Schwefelsäure nach Abtrennung der ausgefällten Metallsalze zum Aufschluss zurückgeführt wird, während der übrige Teil der Suspension ohne Abtrennung der Metallsalze, und gegebenenfalls auch die vom zurückgeführten Teil der aufkonzentrierten abgetrennten Metallsalze geröstet werden, dass die bei der Röstung entstehenden Schwefeloxide zu hochkonzentrierter Schwefelsäure umgesetzt werden, und dass diese hochkonzentrierte Schwefelsäure ebenfalls zum Aufschluss zurückgeführt wird.

Der Anteil der direkt in den Aufschluss zurückgeführten aufkonzentrierten Schwefelsäure kann bei einem bevorzugten Ausführungbeispiel auch Null sein, d.h. dass die gesamte aufkonzentrierte Suspension der Röstanlage zugeführt wird. Damit wird das Verfahren besonders einfach, da keine Filteranlage für die Suspension erforderlich ist.

Auch wenn ein Teil der aufkonzentrierten Schwefelsäure, mit Vorteil maximal ein Viertel, in der Regel jedoch weniger, in den Aufschluss zurückgeführt wird, reduzieren sich die in der aufkonzentrierten Säure rückgeführten Metallsalze auf einen Bruchteil der Verunreinigungen bei vorbekannten Verfahren, so dass die Pigmentqualität deutlich verbessert ist.

In den beiliegenden Figuren sind Zirkulationsschemata der Schwefelsäure bei erfindungsgemässen Verfahren mit verschiedenen Ausgangsmaterialien und verschiedenen Anteilen rückgeführter aufkonzentrierter Schwefelsäure dargestellt. Es zeigen:
- Fig. 1: ein Zirkulationsschema unter Verwendung von QIT-Schlacke mit vollständiger Ueberführung der Suspension in die Röstung, und
- Fig. 2: ein Zirkulationsschema für QIT-Schlacke unter direkter Rückführung etwa eines Fünftels der aufkonzentrierten Schwefelsäure

Die in den Zirkulationsschemata der Figuren angegebenen Zahlenwerte bezeichnen die jeweiligen Mengen 100%iger Schwefelsäure in der Säure, bzw. Suspension der angegebenen Schwefelsäurekonzentration in Tonnen, bezogen auf eine Tonne hergestelltes Titandioxid.

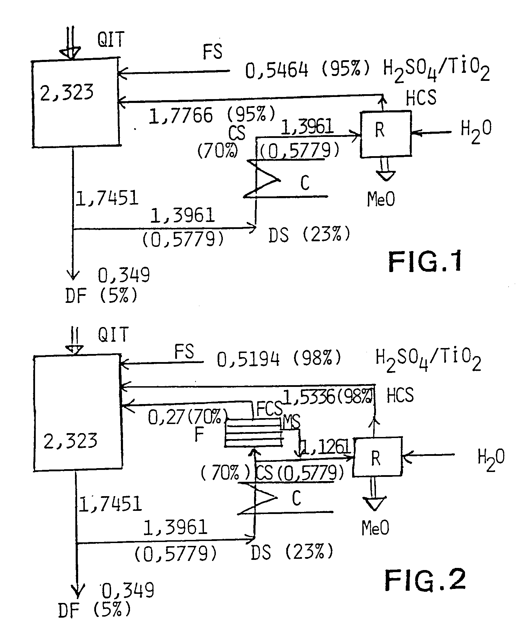

In den in den Figuren 1 und 2 wiedergegebenen Schemata wird kanadische QIT-Titanschlacke der Quebec Iron and Titanium Corp. mit einem TiO₂-Gehalt von 78,5% verwendet, dabei ist bereits ein grosser Teil des im Erz, insbesondere im Ilmenit enthaltenen Eisensulfats abgetrennt, so dass die Titanschlacke nur noch einen kleinen Teil von Eisen, jedoch grössere Anteile anderer Metalle, beispielsweise Aluminium und Magnesium, und insbesondere störende Anteile von Chrom und Vanadium aufweist.

In dem in Fig. 1 dargestellten Beispiel werden pro Tonne (t) erzeugtes Titandioxid 2,323 t Schwefelsäure, bezogen auf 100%, mit einer Konzentration von über 90,5 Gew.-%, z.B. 95 Gew.-%, sowie Dampf benötigt. Bei dem auf den Rohstoff-Aufschluss folgenden Titandioxid-Herstellverfahren fallen 1,3961 t Abfallschwefelsäure, bezogen auf 100%, mit einem Metallsulfat-Anteil entsprechend 0,5779 t Schwefelsäure als Dünnsäure DS an, sowie 0,3490 t 5%ige Schwefelsäure als Dünnfiltrat DF, welche entsorgt werden muss, da eine Wiederaufbereitung sehr unwirtschaftlich wäre. Die Dünnschwefelsäure wird in einer mehrstufigen Eindampfanlage C auf eine Konzentration von ca. 70 Gew.-% aufkonzentriert, wobei der grösste Teil der in der Abfallsäure enthaltenen Salze, insbesondere der Metallsulfate, ausfällt und in Suspension geht. Für die Aufkonzentrierung kann dabei Dampf von üblichen Drücken und Temperaturen verwendet werden, welcher zum Teil bei der folgenden Röstung anfällt, zum Teil kann er aber auch als Abwärme aus dem Titandioxid-Produktionsprozess entnommen werden, was die Energiekosten neben den Vorteilen der Mehrstufigkeit zusätzlich günstig beeinflusst.

Die gebildete Suspension (Slurry) CS mit einem Schwefelsäuregehalt in flüssiger Form von 1,3961 t und in Form von Metallsulfaten von 0,5779 t wird einer Röstanlage R zugeführt und dort gespalten. Aus den entstehenden gasförmigen Schwefeloxiden wird durch Zugabe von Wasser 1,7766 t hochkonzentrierte Schwefelsäure HCS gebildet.

Diese aus der Röstung erhaltene hochkonzentrierte Schwefelsäure HCS wird in den Aufschluss zurückgeführt, wobei der im Prozess entstehende Schwefelsäureverlust durch Beigabe von 0,5464 t Frischsäure FS ausgeglichen wird. Die bei der Röstung anfallenden, weitgehend schwefelsäurefreien Metalloxide MeO werden entsorgt und einer Deponie zugeführt.

Fig. 2 zeigt ein Ausführungsbeispiel, bei welchem ebenfalls QIT-Schlacke als Rohstoff verwendet wird. Zum Unterschied zu dem in der vorangegangenen Figur dargestellten Beispiel wird jedoch ein Teil der Suspension CS nach der Aufkonzentrierung auf 70 Gew.-% mit einem Anteil von 0,270 t Schwefelsäure, bezogen auf 100%, abgezweigt, d.h. ca. 20% der Suspension. Dieser Teil wird einer Filterpresse F zugeführt, in welcher die ausgefällten Metallsalze MS abgetrennt werden. Die filtrierte aufkonzentrierte Schwefelsäure FCS wird in den Titanrohstoff-Aufschluss zurückgeführt, während die Filtersalze MS mit dem ungefilterten Teil der Suspension CS mit einem Flüssiggehalt von Schwefelsäure von 1,1261 t und einem Schwefelsäuregehalt in Sulfaten von 0,5779 t der Röstung R zugeführt werden. Aus den Röstgasen erhält man durch Zugabe von Wasser 1,5336 t Schwefelsäure HCS von 98 Gew.-%, welche in den Aufschluss zurückgeführt wird. In diesem Fall ist eine Zugabe von 0,5194 t 98%iger Frischsäure FS als Ausgleich der Verluste erforderlich.

Im Vergleich zu dem aus der DE-A-2 729 755 zu entnehmenden Vergleichsbeispiel ist der Gehalt der wiederaufbereiteten und rezyklierten Schwefelsäure an metallischen Verunreinigungen erheblich reduziert, d.h. auf höchstens 20% des Vergleichsbeispieles, in der Regel jedoch noch wesentlich weniger, da gemäss dem erfindungsgemässen Verfahren die aufkonzentrierte Suspension vollständig, oder wenigstens der überwiegende Teil derselben der Röstung zugeführt wird, bei der ein wesentlich grösserer Teil der Verunreinigungen abgetrennt wird als bei einer konventionellen Filterung. Die Qualität der erzeugten Titandioxidpigmente ist daher deutlich verbessert und deren Fremdstoffgehalt wesentlich vermindert, ohne die Notwendigkeit, die Abfallschwefelsäure auf höhere Konzentrationen mittels aufwendiger Einrichtungen und erhöhtem Energieeinsatz hochkonzentrieren zu müssen.

Es ist klar, dass die einzelnen Zahlenwerte je nach Provenienz der Rohmaterialien etwas verschieden sein müssen. Bei Verwendung südafrikanischer, kanadischer, norwegischer oder australischer Titanschlacke, bezw. von Ilmeniten verschiedenen Ursprunges müssen die benötigten Mengen an die jeweilige Rohstoffzusammensetzung unter Berücksichtigung der Lehre der Erfindung angepasst werden.

## Patentansprüche

1. Verfahren zur Wiederverwendung der bei der Titandioxidherstellung nach dem Sulfatverfahren anfallenden Abfallschwefelsäure niedriger Konzentration, wobei die anfallende Abfallschwefelsäure von einer Ausgangskonzentration von 20 - 24 Gew.-% auf 65 - 82 Gew.-%, vorzugsweise auf 65 - 75 Gew.-%, aufkonzentriert wird, wobei ein Teil der gelösten Metallsalze ausfällt und mit der aufkonzentrierten Schwefelsäure eine Suspension bildet, und wobei hochkonzentrierte Schwefelsäure zum Titanrohstoff-Aufschluss zurückgeführt wird, dadurch gekennzeichnet dass höchstens nur ein Viertel der aus der Abfallschwefelsäure (DS) gewonnenen aufkonzentrierten Schwefelsäure nach Abtrennung der ausgefällten Metallsalze (MS) zum Aufschluss zurückgeführt wird, während der übrige Teil der Suspension ohne Abtrennung der Metallsalze und gegebenenfalls auch die vom zurückgeführten Teil der aufkonzentrierten Schwefelsäure abgetrennten Metallsalze geröstet werden, dass die bei der Röstung (R) entstehenden Schwefeloxide zu hochkonzentrierter Schwefelsäure umgesetzt werden, und dass diese hochkonzentrierte Schwefelsäure ebenfalls zum Aufschluss zurückgeführt wird.

2. Verfahren nach Anspruch 1, dadurch gekennzeichnet, dass die gesamte aufkonzentrierte Schwefelsäure (CS) mit den ausgefällten Metallsalzen geröstet wird.

3. Verfahren nach einem der Ansprüche 1 oder 2, dadurch gekennzeichnet, dass für die Aufkonzentrierung (C) der Abfallschwefelsäure wenigstens zum Teil Dampf verwendet wird, welcher bei der Röstung (R) der aufkonzentrierten Schwefelsäure und gegebenenfalls der abgetrennten Metallsalze anfällt.

4. Verfahren nach einem der Ansprüche 1 - 3, dadurch gekennzeichnet, dass für die Aufkonzentrierung (C) wenigstens zum Teil Abwärme aus dem Titandioxid-Produktionsprozess verwendet wird.

## Claims

1. Process for the reuse of the spent sulphuric acid of low concentration accruing upon the production of titanium dioxide in accordance with the sulphate process, in which respect the accruing spent sulphuric acid of an initial concentration of 20% to 24% by weight is concentrated to 62% to 82% by weight, preferably to 65% to 75% by weight, in which respect part of the dissolved metal salts precipitates and forms a suspension with the concentrated sulphuric acid, and in which respect highly concentrated sulphuric acid is returned to the titanium raw material decomposition, characterised in that at most only a quarter of the concentrated sulphuric acid obtained from the spent sulphuric acid (DS) after separation of the precipitated metal salts (MS) is returned to the decomposition, whilst the remaining part of the suspension without separation of the metal salts and possibly also the metal salts separated from the returned part of the concentrated sulphuric acid are roasted, in that the sulphur oxides arising upon the roasting (R) are converted into highly concentrated sulphuric acid, and in that this highly concentrated sulphuric acid is likewise returned to the decomposition.

2. Process according to claim 1, characterised in that the entire concentrated sulphuric acid (CS) with the precipitated metal salts is roasted.

3. Process according to one of claims 1 or 2, characterised in that at least partly steam, which accrues upon the roasting (R) of the concentrated sulphuric acid and possibly of the separated metal salts, is used for the concentration (C) of the spent sulphuric acid.

4. Process according to any one of claims 1 to 3, characterised in that at least partly waste heat from the titanium dioxide production process is used for the concentration (C).

## Revendications

1. Procédé de réutilisation de l'acide sulfurique résiduaire à faible concentration lors de la fabrication de dioxyde de titane selon le procédé au sulfate, dans lequel l'acide sulfurique résiduaire produit est reconcentré à partir d'une concentration initiale de 20 à 24% en poids jusqu'à 65 à 82% en poids, de préférence à 65 à 75% en poids, tandis qu'une partie des sels métalliques dissous précipite et forme une suspension avec l'acide sulfurique reconcentré, l'acide sulfurique porté à une haute concentration étant recyclé vers la décomposition de la matière première titanifère,
**caractérisé** en ce qu'au maximum seulement un quart de l'acide sulfurique concentré obtenu à partir de l'acide sulfurique résiduaire (DS) est recyclé vers la décomposition après séparation des sels métalliques précipités (MS), tandis que la partie restante de la suspension est grillée sans séparation des sels métalliques, de même que, le cas échéant , les sels métalliques séparés de la fraction recyclée de l'acide sulfurique reconcentré, en ce que les oxydes de soufre produits lors du grillage (R) sont convertis en acide sulfurique à haute concentration, et en ce que cet acide sulfurique à haute concentration est également recyclé vers la décomposition.

2. Procédé selon la revendication 1, caractérisé en ce que la totalité de l'acide sulfurique reconcentré (CS) avec les sels métalliques précipités est grillée.

3. Procédé selon une des revendications 1 ou 2, caractérisé en ce qu'on utilise pour la reconcentration (C) de l'acide sulfurique résiduaire, au moins partiellement de la vapeur produite lors du grillage (R) de l'acide sulfurique reconcentré et, le cas échéant, des sels métalliques séparés.

4. Procédé selon une des revendications 1 à 3, caractérisé en ce qu'on utilise pour la reconcentration (C) au moins en partie la chaleur perdue provenant du processus de production du dioxyde de titane.
